# EUROPÄISCHE PATENTANMELDUNG

(11) **EP 1 842 465 A2**
(43) Veröffentlichungstag der Anmeldung: **10.10.2007**
(21) Anmeldenummer: 07110604.1
(22) Anmeldetag: 27.07.2004
(51) Int. Cl.: A47J 31/06, A47J 31/44

(54) **Kaffeefilteraufsatz**

(30) Priorität: 04.12.2003 DE 20318733 U; 04.12.2003 DE 20318734 U; 16.12.2003 DE 20319485 U; 20.02.2004 DE 202004002691 U; 31.03.2004 DE 202004005107 U; 28.05.2004 DE 202004008707 U; 06.11.2003 DE 10352316; 11.08.2003 WO PCT/DE03/02711; 28.07.2003 DE 10334376
(62) Teilanmeldung aus: 04017787.5
(71) Anmelder: Merz, Michaela, 82380 Peissenberg (DE); Pirkl, Herbert Robert, 82380 Peissenberg (DE)
(72) Erfinder: Merz, Michaela, 82380 Peissenberg (DE); Pirkl, Herbert Robert, 82380 Peissenberg (DE); Brandt, Werner, 45239 Essen (DE)
(74) Vertreter: Reitstötter - Kinzebach

(57) **Zusammenfassung**

Die Erfindung betrifft einen Kaffeefilteraufsatz zum Verteilen von Brühwasser auf Kaffeemehl mit einer Verteilerscheibe (11), die mit einem Haltering (12) verbunden ist, wobei in der Verteilerscheibe Durchlassöffnungen (17) ausgespart sind, die kreisförmig um das Zentrum der Verteilerscheibe (11) angeordnet sind, wobei die Durchlassöffnungen (17) als schlitzartige Kreissegmente ausgebildet sind, die sich von einem ersten Durchmesser (D) auf der Oberseite (15) der Verteilerscheibe (11) zu einem zweiten Durchmesser (d) auf der im wesentlichen ebenen Unterseite (16) der Verteilerscheibe (11) verjüngen, wobei sich die Durchlassöffnungen (17) in Form von Auslaßkanälen (18) über die im wesentlichen ebene Unterseite (16) der Verteilerscheibe (11) hinaus nach unten erstrecken.

## Beschreibung

### Gebiet der Erfindung

Die Erfindung betrifft einen Kaffeefilteraufsatz zum Verteilen von Brühwasser auf Kaffeemehl.

### Stand der Technik

In Privathaushalten aber auch im gastronomischen Bereich werden zur Herstellung von Filterkaffee üblicherweise Kaffeemaschinen verwendet, bei denen erhitztes Wasser, das im Folgenden als Brühwasser bezeichnet wird, nach Durchlaufen einer Heizeinrichtung über einen Tropfauslaß auf Kaffeemehl aufgegeben, das sich in einem trichterförmigen Filter befindet, der wiederum in einem Filterhalter angeordnet ist. Am Boden des Filterhalters sind ein oder mehrere Öffnungen ausgespart, durch die der Kaffee mit dem aus dem Kaffeemehl extrahierten Aromastoffen in eine unter dem Filterhalter angeordnete Kaffeekanne fließen kann. Anstelle einer üblichen Kaffeemaschine mit integrierter Heizvorrichtung für das Brühwasser kann eine solche Filteranordnung selbstverständlich auch manuell mit separat erhitztem Wasser, beispielsweise aus einem Wasserkocher, beaufschlagt werden.

Sowohl bei einem manuellen Kaffeebrühverfahren, als auch bei einem automatischen Brühverfahren, wird das Brühwasser üblicherweise im Zentrum des Kaffeefilters aufgegeben, so daß die Extraktion von Aromastoffen in erster Linie in diesem Bereich erfolgt. In den Randbereichen ist die Ausnutzung des Kaffeemehls wesentlich schlechter, so daß hier Aromastoffe zum überwiegenden Teil im Kaffeemehl verbleiben. Um auf diese Weise einen aromatisch schmeckenden Kaffee zu brühen, ist es daher erforderlich, eine entsprechend große Menge des Kaffeemehls zu verwenden, da im mittleren Bereich des Kaffeefilters die Aromastoffe relativ schnell ausgezehrt sind, während im Randbereich des Filters das Kaffeemehl nur unzureichend genutzt wird.

Im Wassertank von Kaffeemaschinen befindet sich ein Wasserablaufschlauch, welcher in der Regel eine Wasserablauföffnung von 5 cm aufweist.

Der Wasserablaufschlauch befindet sich im Wassertank, und zwar etwas vertieft, damit u.a. ein Wasserablaufarm darauf gesteckt und somit das Kaffeewasser in den Kaffeefilter direkt hinein geleitet werden kann.

Auf dem Wasserablaufschlauch werden des weiteren verschiedene Wasserablaufarme verwendet, einmal mit mehreren waagerechten Wasserablauföffnungen, desweiteren Wasserablauföffnungen wie ein Duschsystem.

Bekannt ist es auch, daß es unter einem waagerechten Duschsystem pro Durchlauföffnung eine Rundvertiefung gibt.

Das Aufbrühen im Filter vollzieht sich einmal in der Mitte der Kaffeemehloberfläche, wobei außen an der Kaffeefiltertüte am Rand Kaffeemehl kleben bleibt, da der Wasserspiegel immer eine gewisse Höhe erreicht.

Zwischen dem Kaffeefilter und dem oberen Kaffeemaschinen-Deckel mit den Wasserablauföffnungen liegen immer gewisse Luftspielräume. Also gibt es zwischen Kaffeemaschinen-Deckel und Kaffeefilter keinen geschlossenen Abschluß.

Um eine bessere Verteilung des Brühwassers auf dem Kaffeemehl zu erreichen, hat der Anmelder in der deutschen Gebrauchsmusteranmeldung DE 203 18 733 vorgeschlagen, auf dem Filterhalter einen Kaffeefilteraufsatz mit einer Verteilerscheibe, in der Durchlaßöffnungen ausgespart sind, anzuordnen. Bei der dort beschriebenen Anordnung ist jedoch unbefriedigend, daß in den Fällen, in denen die Durchlaßöffnungen bündig mit der Unterseite der Durchlaßscheibe abschließen, ein gleichmäßiges Abtropfen des Brühwassers auf das darunter befindliche Kaffeemehl nicht gewährleistet ist. Vielmehr verteilt sich das Brühwasser häufig an der Unterseite der Scheibe und tropft unkontrollierbar auf das Kaffeemehl herunter.

Die DE 101 11 166 A1 offenbart eine Vorrichtung, bei der eine gattungsgemäße Vorrichtung verwendet wird, die mehrere in einer Linie angeordnete Auslaßöffnungen hat, um das Brühwasser auf der Oberfläche des im Kaffeefilter angeordneten Kaffeemehls aufzugeben. Bereits durch diese Vorrichtung läßt sich die Menge des zu verwendenden Kaffeemehls wesentlich reduzieren.

### Durch die Erfindung zu lösende Aufgaben

Eine durch die Erfindung zu lösende Aufgabe ist es, bekannte Kaffeefilteraufsätze für manuelle oder automatische Kaffeezubereitung so weiterzubilden, daß die Ausnutzung des Kaffeemehls verbessert wird und letztlich weniger Kaffeemehl zum Aufbrühen einer bestimmten Menge Kaffee benötigt wird.

Eine weitere Aufgabe ist es, eine Vorrichtung bereitzustellen, die universell einsetzbar ist, so daß auf die unterschiedlichen Arten von Papierfiltertüten, Filtern und Kaffeemaschine verzichtet werden kann.

### Lösung der Aufgaben

Gelöst werden diese technischen Probleme durch die Kaffeefilteraufsätze gemäß der vorliegenden Ansprüche.

Die Erfindung betrifft in einem ersten Aspekt gemäß den Ansprüchen 1 bis 12 einen Kaffeefilteraufsatz zum Verteilen von Brühwasser auf Kaffeemehl mit einer Verteilerscheibe, die mit einem Haltering verbunden ist, wobei in der Verteilerscheibe Durchlaßöffnungen ausgespart sind, die kreisförmig um das Zentrum der Verteilerscheibe angeordnet sind, wobei die Durchlaßöffnungen als schlitzartige Kreissegmente ausgebildet sind, die sich von einem ersten Durchmesser auf der Oberseite der Verteilerscheibe zu einem zweiten Durchmesser auf der im wesentlichen ebenen Unterseite der Verteilerscheibe verjüngen, wobei sich die Durchlaßöffnungen in Form von Auslaßkanälen über die im wesentlichen ebene Unterseite der Verteilerscheibe hinaus nach unten erstrecken.

Mit dem erfindungsgemäßen Kaffeefilteraufsatz ist es möglich, eine definierte Brühwasserabgabe aufrecht zu erhalten, so daß die Anordnung der Durchlaßöffnungen in der Verteilerscheibe auch der tatsächlichen Brühwasseraufgabe auf das Kaffeemehl entspricht.

Gemäß einer bevorzugten Ausführungsform der Erfindung weisen die Auslaßkanäle einen kegelstumpfartigen Querschnitt auf und enden in einer Abrißkante, an der das Brühwasser kontrolliert abtropfen kann, ohne an der Unterseite der Verteilerscheibe entlang zu laufen. Die Auslaßkanäle sind vorzugsweise ebenfalls einstückig mit der Verteilerscheibe ausgebildet.

Die lichte Weite der Auslaßkanäle entspricht im wesentlichen dem zweiten Durchmesser der Durchlaßöffnungen, d.h. die Durchlaßöffnung setzt sich mit im wesentlichen konstantem Durchmesser im Auslaßkanal fort. Gemäß einer alternativen Ausführungsform kann sich der verjüngende Querschnitt der Durchlaßöffnungen aber auch so in den Auslaßkanälen fortsetzen, daß beispielsweise der bevorzugte kleinste Durchmesser, der hier als zweiter Durchmesser bezeichnet wird, erst an der Abrißkante der Auslaßkanäle erreicht wird.

Vorzugsweise liegt der erste Durchmesser der Durchlaßöffnungen, d.h. der Durchmesser auf der Oberseite der Verteilerscheibe, im Bereich von 3,5 bis 7 mm, vorzugsweise 4 bis 6 mm und besonders bevorzugt bei etwa 5 mm, während der zweite Durchmesser bevorzugt im Bereich von 0,5 bis 3 mm, vorzugsweise 0,8 bis 2 mm und besonders bevorzugt bei etwa 1 mm liegt.

Die Höhe, mit der sich der Auslaßkanal über die Unterseite der Verteilerscheibe nach unten erstreckt, kann beispielsweise 0,5 bis 5 mm betragen und liegt vorzugsweise im Bereich von 1 bis 3 mm und besonders bevorzugt bei etwa 2 mm.

Eine besonders gleichmäßige Brühwasseraufgabe auf das Kaffeemehl wird erreicht, wenn die Durchlaßöffnungen auf konzentrischen Kreisen in der Verteilerscheibe angeordnet sind. Besonders bevorzugt sind die Durchlaßöffnungen als Kreissegmente gleichmäßig auf jedem Kreis verteilt. Beispielsweise können vier Durchlaßöffnungen vorgesehen sein, die jeweils als gleich lange Kreissegmente auf dem Kreis verteilt sind. So können die vier durchlässigen Kreissegmente beispielsweise einen Umfangswinkel von jeweils 45° abdecken und sind jeweils durch undurchlässige Bereiche der Verteilerfläche von wiederum 45° Umfangswinkel voneinander getrennt.

Der Durchmesser des erfindungsgemäßen Kaffeefilteraufsatzes wird entsprechend der Filterhalter gewählt, auf denen er zum Einsatz kommen soll. Für kleine Filterhalter, die für Filter des sog. Typs 102 vorgesehen sind, werden beispielsweise Kaffeefilteraufsätze mit einem Durchmesser von 11,5 cm verwendet, während für sog. Typ 104-Filterhalter Kaffeefilteraufsätze mit einem Durchmesser von 13 cm verwendet werden. Größere Filterhalter, beispielsweise für Filter vom Typ 1 x 6, die vorzugsweise im gastronomischen Bereich verwendet werden, können mit Kaffeefilteraufsätzen mit einem Durchmesser von 15,5 cm bestückt werden. Bevorzugt sind in der Verteilerscheibe des erfindungsgemäßen Kaffeefilteraufsatzes abhängig vom Durchmesser der Verteilerscheibe 1 bis 6 und vorzugsweise 2 bis 4 Kreise mit entsprechenden kreissegmentartigen Durchlaßöffnungen vorgesehen. Vorteilhaft verwendet man beim Filteraufsatz mit 11,5 cm Durchmesser 1 oder zwei, bevorzugt 2 Kreise, beim Aufsatz mit 13 cm Durchmesser 2 oder 3, vorzugsweise 3 Kreise und beim Filter mit 15,5 cm Durchmesser 3 oder 4, vorzugsweise 4 Kreise.

Es ist auch möglich, lediglich einen Filterhaltertyp zu verwenden und entsprechend der eingefüllten Kaffeemenge mehr oder weniger Kreise mit Durchlaßöffnungen für das Auftropfen von Brühwasser freizugeben. Dazu ist vorzugsweise auf der Oberseite der Verteilerscheibe ein herausnehmbarer kreisförmiger Einsatz mit einem L-fömigen Querschnitt vorgesehen, wobei der horizontale Sockel des Einsatzes so dimensioniert ist, daß ein oder mehrere der Kreise bedeckt werden, wobei man selbstverständlich bei der Verwendung von weniger Kaffeemehl die äußersten Kreise in der Verteilerscheibe abdeckt, so daß Brühwasser lediglich durch die Durchlaßöffnungen der inneren Kreise abgegeben werden kann.

Mit dem erfindungsgemäßen Kaffeefilteraufsatz kann bei hoher Qualität und bestem Aroma des resultierenden Kaffees eine Steigerung der Kaffeeausbeute von wenigstens 30 % erzielt werden. So können mit einem herkömmlichen 102-Filter ca. 15 Tassen Kaffee hergestellt werden. Bei einem 104-Filter liegt die Ausbeute bei ca. 28 Tassen und bei einem 1 x 6-Filter bei ca. 40 Tassen.

Die Erfindung betrifft auch eine Filtereinheit zur Herstellung von Filterkaffee mit einem Filterhalter, welcher zur Aufnahme einer Filtertüte dient und einem lösbar mit dem Filterhalter verbundenen erfindungsgemäßen Kaffeefilteraufsatz. Der Kaffeefilteraufsatz kann einfach in eine obere Öffnung des Filterhalters eingesetzt sein. Gemäß einer bevorzugten Ausführungsform ist er jedoch über eine Schraub- oder Bajonettverbindung am oberen Ende des Filterhalters montiert.

Die Erfindung wird im folgenden unter Bezugnahme auf ein in der beigefügten Zeichnung dargestelltes Ausführungsbeispiel näher erläutert.

In der Zeichnung zeigt
Fig. 1 einen Querschnitt durch einen erfindungsgemäßen Kaffeefilteraufsatz;
Fig. 2 eine Aufsicht auf den Kaffeefilteraufsatz der Fig. 1.

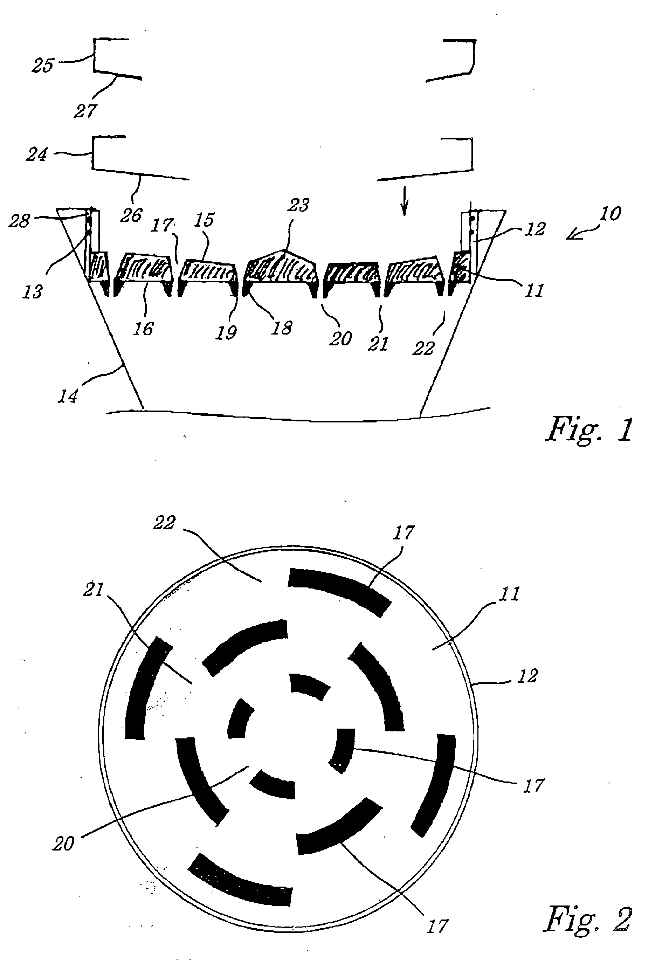

Der erfindungsgemäße Kaffeefilteraufsatz wird in Fig. 1 insgesamt mit der Bezugsziffer 10 bezeichnet. Der Kaffeefilteraufsatz 10 umfaßt eine Verteilerscheibe 11, die mit einem umlaufenden Haltering 12 verbunden ist. Vorzugsweise werden die Verteilerscheibe und der Haltering als einstückiges Kunststoffteil, beispielsweise als Spritzgußteil ausgebildet. Am Außenumfang des Halterings sind Befestigungsmittel 13 vorgesehen, mit denen der Haltering am oberen Ende eines (nur teilweise angedeuteten) Filterhalters 14 montiert wird. Bei den Befestigungsmitteln 13 kann es sich beispielsweise um ein Gewinde eines Schraubverschlusses oder einen Bajonettverschluß handeln, wobei die Befestigungsmittel 13 mit komplementären am oberen Ende des Filterhalters 14 angebrachten Befestigungsmitteln zusammen wirken. Selbstverständlich kann der Kaffeefilteraufsatz 10 auch ohne weitere Befestigungsmittel formschlüssig in die Oberseite des Filterhalters 14 eingesetzt werden.

Die Verteilerscheibe weist eine Oberseite 15 und eine im wesentlichen ebene Unterseite 16 auf. In der Verteilerscheibe sind schlitzartige Durchlaßöffnungen 17 ausgespart, die mit einem ersten Durchmesser D in die Oberseite 15 und mit einem kleineren Durchmesser d in die Unterseite 16 münden. Im Querschnitt der Fig. 1 weisen die Durchlaßöffnungen 17 daher eine trichterförmige Verjüngung auf. Um ein gleichmäßiges und definiertes Abtropfen des Brühwassers auf das Kaffeemehl zu erreichen, erstrecken sich die Durchlaßöffnungen in Form von Auslaßkanälen 18 über die im wesentlichen ebene Unterseite 16 der Verteilerscheibe 11 hinaus nach unten. Die Auslaßkanäle weisen einen kegelstumpfartigen Querschnitt auf und enden in einer Abrißkante 19, an der das Brühwasser definiert abtropfen kann. Im dargestellten Beispiel ist die lichte Weite, d.h. der Durchlaß in den Auslaßkanälen über die gesamte Höhe h des Auslaßkanals hinweg konstant und entspricht dem zweiten Durchmesser d der entsprechenden Durchlaßöffnung. Vorzugsweise liegt der zweite Durchmesser d im Bereich von 1 mm. Die Durchlaßöffnungen 17 sind auf konzentrischen Kreisen 20, 21, 22 angeordnet, wobei im dargestellten Bereich ein Kaffeefilteraufsatz mit einem Durchmesser von 13 cm verwendet wird, der beispielsweise für die weit verbreiteten 104-Filterhalter geeignet ist. In diesem Fall sind die Durchlaßöffnungen auf drei konzentrischen Kreisen 20, 21, 22 angeordnet, um eine möglichst gleichmäßige Aufgabe des Brühwassers über den gesamten Filterquerschnitt zu erreichen.

Die Oberseite 15 des Kaffeefilteraufsatzes ist so profiliert, daß das oben eingegossene heiße Wasser möglichst gleichmäßig auf die einzelnen Kreise 20, 21, 22 verteilt wird. So ist im dargestellten Beispiel eine zentrale Erhebung 23 vorgesehen, die das beispielsweise von einer automatischen Kaffeemaschine erzeugte heiße Wasser, das von einem Tropfauslaß der Heizeinrichtung herabtropft, gleichmäßig in radialer Richtung verteilt. Die Oberseite 15 kann zum Außenumfang hin entlang einer Schräge ansteigen.

Es können verschiedene Einsätze 24, 25 vorgesehen sein, die auf der Oberseite des Kaffeefilteraufsatzes 10 so eingesetzt werden, daß entweder die Öffnungen des äußeren Kreisrings 22 oder die Öffnungen der beiden äußeren Kreisringe 21 und 22 abgedeckt werden, so daß Brühwasser nur über die freibleibenden Öffnungen nach unten auf das Kaffeemehl tropfen kann. Dazu weisen die Einsätze 24, 25 ein im wesentlichen L-förmiges Profil auf, wobei der horizontale Sockel 26, 27 jedes Einsatzes 24, 25 so dimensioniert ist, daß die entsprechende Anzahl von Kreisringen bedeckt wird. Obwohl von einem "horizontalen" Sockel gesprochen wird, versteht sich, daß bei einer abgeschrägten Oberseite 15 des erfindungsgemäßen Kaffeefilteraufsatzes die Kontur der Sockel 26, 27 entsprechend angepaßt ist, so daß ein dichtes Verschließen der Öffnungen der jeweiligen Außenringe 21 und/oder 22 gewährleistet ist.

Vorzugsweise überragt der Haltering 12 des erfindungsgemäßen Kaffeefilteraufsatzes 10 die Oberseite 15 mit einem gewissen Überstand 28, so daß ein Überlaufen von Brühwasser verhindert wird.

Fig. 2 zeigt eine Aufsicht auf die Oberseite 15 des erfindungsgemäßen Kaffeefilteraufsatzes, allerdings ohne Einsatz 24 oder 25, wobei die bereits im Zusammenhang mit der Fig. 1 erläuterten Bauelemente mit denselben Bezugsziffern bezeichnet sind. Man erkennt insbesondere die drei Kreisringe 20, 21, 22, auf denen jeweils 4 Durchlaßöffnungen 17 gleichmäßig verteilt sind.

Die Erfindung betrifft in einem zweiten Aspekt gemäß den Ansprüchen 13 bis 35 einen Kaffeefilteraufsatz zum Verteilen von Brühwasser auf Kaffeemehl mit einer Verteilerscheibe, die mit einem Haltering verbunden ist, wobei in der Verteilerscheibe Durchlaßöffnungen ausgespart sind. Der erfindungsgemäße Kaffeefilteraufsatz ist dadurch gekennzeichnet, daß die Durchlaßöffnungen als schlitzartige Kreissegmente ausgebildet sind, die konzentrisch um das Zentrum der Verteilerscheibe herum angeordnet sind.

Mit dem erfindungsgemäßen Kaffeefilteraufsatz wird gewährleistet, daß das beispielsweise in einem Papierfilter im Filterhalter befindliche Kaffeemehl über den gesamten, senkrecht zur Wasseraufgabe liegenden Querschnitt gleichmäßig mit Brühwasser benetzt wird. Die Effizienz der Extraktion von Aromastoffen im Kaffeemehl wird mit dem erfindungsgemäßen Kaffeefilteraufsatz optimiert. Durch die Ausbildung der Durchlaßöffnungen als schlitzartige Kreissegmente ist zudem gewährleistet, daß ausreichend viel Brühwasser auf das Kaffeemehl aufgegeben wird, so daß das Kaffeemehl wirksam aufgewirbelt und gleichmäßig und vollständig von Brühwasser umspült wird, was die Abgabe von Aromastoffen begünstigt. Gleichzeitig ist die Verweildauer des Brühwassers im Kaffeefilterhalter kurz genug, um zu verhindern, daß übermäßig viele Bitterstoffe an den Kaffee abgegeben werden. Mit dem erfindungsgemäßen Kaffeefilteraufsatz erhält man daher einen geschmacklich gehaltvollen aber keineswegs bitter schmeckenden Kaffee und erzielt gleichzeitig eine hohe Ergiebigkeit bei der Ausnutzung des Kaffeemehls.

Vorzugsweise sind die als schlitzartige Kreissegmente ausgebildeten Durchlaßöffnungen so gestaltet, daß sie sich von einem ersten im wesentlichen quer zum Schlitzverlauf gemessenen Durchmesser auf der Oberseite der Verteilerscheibe zu einem zweiten, kleineren Durchmesser auf der im wesentlichen ebenen Unterseite der Verteilerscheibe verjüngen.

Um definierte Abtropfkanten an der Unterseite des Kaffeefilteraufsatzes zu erzielen, erstrecken sich die Durchlaßöffnungen vorzugsweise in Form von Auslaßkanälen über die im wesentlichen ebene Unterseite der Verteilerscheibe hinaus nach unten. Damit wird verhindert, daß sich Brühwasser undefiniert an der Unterseite der Verteilerscheibe verteilt und an nicht festgelegten Orten nach unten auf das Kaffeemehl abtropft. Vielmehr ist mit der erfindungsgemäßen Ausführungsform gewährleistet, daß die Anordnung der Durchlaßöffnungen in der Verteilerscheibe auch der tatsächlichen Verteilung der Brühwasseraufgabe auf das Kaffeemehl entspricht, was wiederum die gleichmäßige Ausnutzung des gesamten Kaffeemehls begünstigt.

Gemäß einer bevorzugten Ausführungsform der Erfindung weisen die Auslaßkanäle einen kegelstumpfartigen Querschnitt auf und enden in einer Abrißkante, an der das Brühwasser kontrolliert abtropfen kann, ohne an der Unterseite der Verteilerscheibe entlang zu laufen. Die Auslaßkanäle sind vorzugsweise ebenfalls einstückig mit der Verteilerscheibe ausgebildet.

Die lichte Weite der Auslaßkanäle entspricht im wesentlichen dem zweiten Durchmesser der Durchlaßöffnungen, d.h. die Durchlaßöffnung setzt sich mit im wesentlichen konstantem Durchmesser im Auslaßkanal fort. Gemäß einer alternativen Ausführungsform kann sich der verjüngende Querschnitt der Durchlaßöffnungen aber auch so in den Auslaßkanälen fortsetzen, daß beispielsweise der bevorzugte kleinste Durchmesser, der hier als zweiter Durchmesser bezeichnet wird, erst an der Abrißkante der Auslaßkanäle erreicht wird.

Vorzugsweise liegt der erste Durchmesser der Durchlaßöffnungen, d.h. der Durchmesser auf der Oberseite der Verteilerscheibe, im Bereich von 3,5 bis 7 mm, vorzugsweise 4 bis 6 mm und besonders bevorzugt bei etwa 5 mm, während der zweite Durchmesser bevorzugt im Bereich von 0,5 bis 3 mm, vorzugsweise 0,8 bis 2 mm und besonders bevorzugt bei etwa 1 mm liegt.

Die Höhe, mit der sich der Auslaßkanal über die Unterseite der Verteilerscheibe nach unten erstreckt, kann beispielsweise 0,5 bis 5 mm betragen und liegt vorzugsweise im Bereich von 1 bis 3 mm und besonders bevorzugt bei etwa 2 mm.

Eine besonders gleichmäßige Brühwasseraufgabe auf das Kaffeemehl wird erreicht, wenn die Durchlaßöffnungen auf konzentrischen Kreisen in der Verteilerscheibe angeordnet sind. Besonders bevorzugt sind die Durchlaßöffnungen als Kreissegmente gleichmäßig auf jedem Kreis verteilt. Beispielsweise können vier Durchlaßöffnungen vorgesehen sein, die jeweils als gleich lange Kreissegmente auf dem Kreis verteilt sind. So können die vier durchlässigen Kreissegmente beispielsweise einen Umfangswinkel von jeweils 45° abdecken und sind jeweils durch undurchlässige Bereiche der Verteilerfläche von wiederum 45° Umfangswinkel voneinander getrennt.

Der Durchmesser des erfindungsgemäßen Kaffeefilteraufsatzes wird entsprechend der Filterhalter gewählt, auf denen er zum Einsatz kommen soll. Für kleine Filterhalter, die für Filter des sog. Typs 102 vorgesehen sind, werden beispielsweise Kaffeefilteraufsätze mit einem Durchmesser von 11,5 cm verwendet, während für sog. Typ 104 Filterhalter Kaffeefilteraufsätze mit einem Durchmesser von 13 cm verwendet werden. Größere Filterhalter, beispielsweise für Filter vom Typ 1 x 6, die vorzugsweise im gastronomischen Bereich verwendet werden, können mit Kaffeefilteraufsätzen mit einem Durchmesser von 15,5 cm bestückt werden. Bevorzugt sind in der Verteilerscheibe des erfindungsgemäßen Kaffeefilteraufsatzes abhängig vom Durchmesser der Verteilerscheibe 1 bis 6 und vorzugsweise 2 bis 4 Kreise mit entsprechendem kreissegmentartigen Durchlaßöffnungen vorgesehen. Vorteilhaft verwendet man beim Filteraufsatz mit 11,5 cm Durchmesser 1 oder 2, bevorzugt zwei Kreise, beim Aufsatz mit 13 cm Durchmesser 2 oder 3, vorzugsweise 3 Kreise und beim Filter mit 15,5 cm Durchmesser 3 oder 4, vorzugsweise 4 Kreise.

Es ist auch möglich, lediglich einen Filterhaltertyp zu verwenden, und entsprechend der eingefüllten Kaffeemenge mehr oder weniger Kreise mit Durchlaßöffnungen für das Auftropfen von Brühwasser freizugeben. Dazu ist vorzugsweise auf der Oberseite der Verteilerscheibe ein herausnehmbarer kreisförmiger Einsatz mit einem L-förmigen Querschnitt vorgesehen, wobei der horizontale Sockel des Einsatzes so dimensioniert ist, daß ein oder mehrere der Kreise bedeckt werden, wobei man selbstverständlich bei der Verwendung von weniger Kaffeemehl die äußersten Kreise in der Verteilerscheibe abdeckt, so daß Brühwasser lediglich durch die Durchlaßöffnungen der inneren Kreise abgegeben werden kann.

Die gleichmäßige Aufgabe von Brühwasser wird weiter begünstigt, wenn der erfindungsgemäße Kaffeefilteraufsatz, wie gemäß einer bevorzugten Variante der Erfindung vorgesehen, auf der Oberseite der Verteilerscheibe eine zentrale Erhebung aufweist. Im Bereich der zentralen Erhebung ist die Verteilerscheibe für das Brühwasser undurchlässig, so daß das aus einer Brüheinrichtung einer Kaffeemaschine oder das manuell aufgegebene Wasser aus dem zentralen Bereich der Verteilerscheibe zunächst seitlich abfließt und erst dann durch die Durchlaßöffnungen nach unten auf das Kaffeemehl im Filterhalter tropfen kann. Eine minimale, beispielsweise kegelförmige Erhebung im zentralen Bereich der Verteilerscheibe, die nur wenige Millimeter über den tiefsten Bereich der Oberseite hinausragt, ist dabei in vielen Fällen ausreichend.

Gemäß einer besonders bevorzugten Variante ist die Oberseite des Kaffeefilteraufsatzes zum äußeren Rand hin wieder leicht erhöht, so daß die Oberseite der Verteilerscheibe des erfindungsgemäßen Kaffeefilteraufsatzes zwischen der zentralen Erhebung und dem äußeren Haltering ein insgesamt leicht konkaves Profil aufweist.

Vorteilhaft ist der erfindungsgemäße Kaffeefilteraufsatz so dimensioniert, daß er einfach in die obere Öffnung eines herkömmlichen Filterhalters eingesetzt werden kann. In dieser besonders kostengünstig realisierbaren Variante eignet sich der Kaffeefilteraufsatz insbesondere zum manuellen Aufbrühen von Kaffee. In diesem Fall ordnet man den Filterhalter mit Filtertüte und Kaffeemehl auf einer Kaffeekanne an und setzt, bevor man Brühwasser aufgießt, den erfindungsgemäßen Kaffeefilteraufsatz in die obere Öffnung des Kaffeefilterhalters ein.

Gemäß einer bevorzugten Variante weist der Kaffeefilteraufsatz jedoch geeignete Befestigungsmittel auf, mit denen der erfindungsgemäße Kaffeefilteraufsatz entweder am Filterhalter oder am Gehäuse einer Kaffeemaschine befestigt werden kann.

Vorzugsweise sind die Befestigungsmittel am äußeren Umfang des Halterings angeordnet. Der Begriff "Haltering" ist im Sinne der vorliegenden Erfindung weit aufzufassen. Hierunter ist jegliche Konfiguration des äußeren Randes der Verteilerscheibe zu verstehen, die ein Einsetzen oder Befestigen des Kaffeefilteraufsatzes im oder am Filterhalter oder an einer automatischen Kaffeemaschine gewährleistet. Im Extremfall stellt bereits der Außenrand der Verteilerscheibe einen Haltering im Sinne der vorliegenden Erfindung dar.

Die Befestigungsmittel können beispielsweise als Außengewinde oder als Teil eines Bajonettverschlusses ausgebildet sein. Damit kann der Kaffeefilteraufsatz entweder in die obere Öffnung des Filterhalters oder in eine geeignete Halterung an der Unterseite der Brühwasseraufgabeöffnung einer Kaffeemaschine eingeschraubt oder eingesetzt werden.

Gemäß einer besonders bevorzugten Variante sind die Befestigungsmittel des Kaffeefilteraufsatzes als Bügel einer Scharnierhalterung ausgebildet. Damit kann der Kaffeefilteraufsatz schwenkbar am Gehäuse einer Kaffeemaschine befestigt werden. Zum Einfüllen von Kaffeemehl braucht der Kaffeefilteraufsatz daher nur weggeklappt werden und der obere Bereich des Kaffeefilterhalters ist für den Benutzer zugänglich. Das Scharnier ist vorzugsweise so ausgebildet, daß der Bügel des Kaffeefilteraufsatzes lösbar in die entsprechende komplementäre am Gehäuse der Kaffeemaschine angebrachte Gegenhalterung des Scharniers eingesetzt ist, so daß der Benutzer den Kaffeefilteraufsatz, beispielsweise zu Reinigungszwecken, leicht ausbauen kann.

Zur einfacheren Handhabung kann der Kaffeefilteraufsatz, insbesondere im Fall einer schwenkbaren Anlenkung am Gehäuse einer Kaffeemaschine, eine Haltenase aufweisen, die vorzugsweise am Außenrand des Kaffeefilteraufsatzes ausgebildet ist. Diese Haltenase, die beispielsweise als Bügel ausgeformt sein kann, kann vom Benutzer zum Wegklappen des Kaffeefilteraufsatzes leicht von außen ergriffen werden.

Mit dem erfindungsgemäßen Kaffeefilteraufsatz kann bei hoher Qualität und bestem Aroma des resultierenden Kaffees eine Steigerung der Kaffeeausbeute von wenigstens 30 % erzielt werden. So können mit einem herkömmlichen 102-Filter ca. 15 Tassen Kaffee hergestellt werden. Bei einem 104-Filter liegt die Ausbeute bei ca. 28 Tassen und bei einem 1 x 6 Filter bei ca. 40 Tassen.

Die Erfindung gemäß dem zweiten Aspekt betrifft auch eine Filtereinheit zur Herstellung von Filterkaffee mit einem Filterhalter, welcher zur Aufnahme einer Filtertüte dient und einem lösbar mit dem Filterhalter verbundenen erfindungsgemäßen Kaffeefilteraufsatz. Der Kaffeefilteraufsatz kann einfach in eine obere Öffnung des Filterhalters eingesetzt sein. Gemäß einer bevorzugten Ausführungsform ist er jedoch über eine Schraub- oder Bajonettverbindung am oberen Ende des Filterhalters montiert.

Die Erfindung gemäß dem zweiten Aspekt betrifft außerdem eine Kaffeemaschine mit einem Gehäuse, einem Frischwasserbehälter, einer Brüheinrichtung, einer Filtereinheit mit einem Filterhalter und einem unter der Filtereinheit angeordneten Kaffeebehälter, wobei die Filtereinheit einen erfindungsgemäßen Kaffeefilteraufsatz umfasst. Der Kaffeefilteraufsatz kann dabei in den Filterhalter der Filtereinheit eingesetzt oder eingeschraubt oder mit dem Gehäuse der Kaffeemaschine verbunden sein, beispielsweise schwenkbar an dem Kaffeemaschinengehäuse angelenkt sein.

Der zweite Aspekt der Erfindung wird im Folgenden unter Bezugnahme auf ein in der beigefügten Zeichnung dargestelltes Ausführungsbeispiel näher erläutert.

In der Zeichnung zeigt

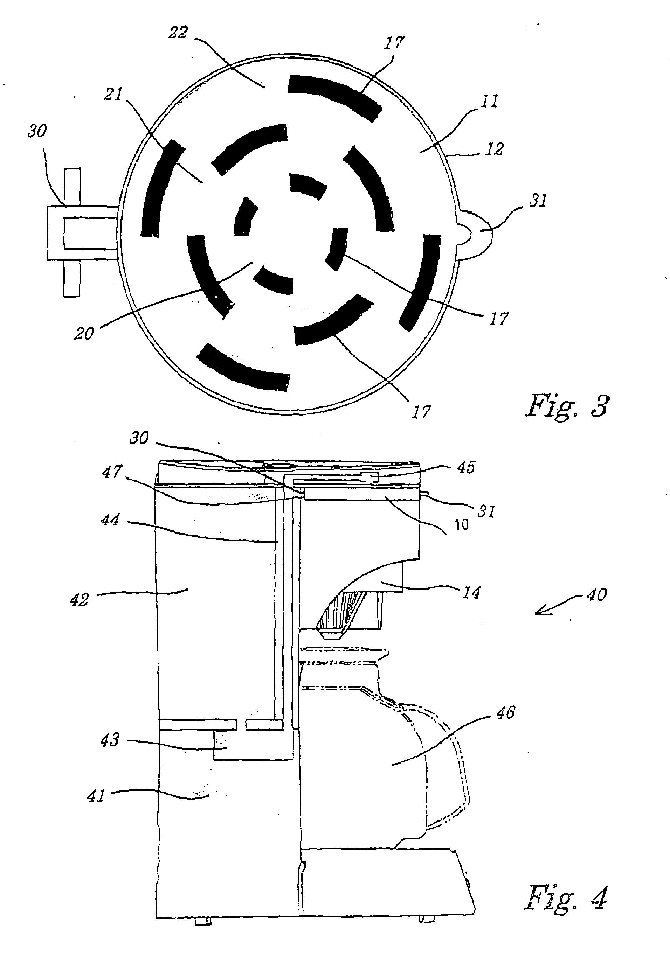

Fig. 3 eine Aufsicht auf eine Variante des Kaffeefilteraufsatzes der Fig. 1 und 2; und

Fig. 4 eine schematische Darstellung einer erfindungsgemäßen Kaffeemaschine.

Der erfindungsgemäße Kaffeefilteraufsatz wird in Fig. 1 insgesamt mit der Bezugsziffer 10 bezeichnet. Der Kaffeefilteraufsatz 10 umfasst eine Verteilerscheibe 11, die mit einem umlaufenden Haltering 12 verbunden ist. Vorzugsweise werden die Verteilerscheibe und der Haltering als einstückiges Kunststoffteil, beispielsweise als Spritzgussteil ausgebildet. Am Außenumfang des Halterings sind Befestigungsmittel 13 vorgesehen, mit denen der Haltering am oberen Ende eines (nur teilweise angedeuteten) Filterhalters 14 montiert wird. Bei den Befestigungsmitteln 13 kann es sich beispielsweise um ein Gewinde eines Schraubverschlusses oder einen Bajonettverschluss handeln, wobei die Befestigungsmittel 13 mit komplementären am oberen Ende des Filterhalters 14 angebrachten Befestigungsmitteln zusammen wirken. Selbstverständlich kann der Kaffeefilteraufsatz 10 auch ohne weitere Befestigungsmittel formschlüssig in die Oberseite des Filterhalters 14 eingesetzt werden.

Die Verteilerscheibe weist eine Oberseite 15 und eine im Wesentlichen ebene Unterseite 16 auf. In der Verteilerscheibe sind schlitzartige Durchlaßöffnungen 17 ausgespart, die mit einem ersten Durchmesser D in die Oberseite 15 und mit einem kleineren Durchmesser d in die Unterseite 16 münden. Im Querschnitt der Fig. 1 weisen die Durchlaßöffnungen 17 daher eine trichterförmige Verjüngung auf. Um ein gleichmäßiges und definiertes Abtropfen des Brühwassers auf das Kaffeemehl zu erreichen, erstrecken sich die Durchlaßöffnungen in Form von Auslaßkanälen 18 über die im Wesentlichen ebene Unterseite 16 der Verteilerscheibe 11 hinaus nach unten. Die Auslaßkanäle weisen einen kegelstumpfartigen Querschnitt auf und enden in einer Abrisskante 19, an der das Brühwasser definiert abtropfen kann. Im dargestellten Beispiel ist die lichte Weite, d.h. der Durchlaß in den Auslaßkanälen über die gesamte Höhe h des Auslaßkanals hinweg konstant und entspricht dem zweiten Durchmesser d der entsprechenden Durchlaßöffnung. Vorzugsweise liegt der zweite Durchmesser d im Bereich von 1 mm, Die Durchlaßöffnungen 17 sind auf konzentrischen Kreisen 20, 21, 22 angeordnet, wobei im dargestellten Beispiel ein Kaffeefilteraufsatz mit einem Durchmesser von 13 cm verwendet wird, der beispielsweise für die weit verbreiteten 104-Filterhalter geeignet ist. In diesem Fall sind die Durchlaßöffnungen auf drei konzentrischen Kreisen 20, 21, 22 angeordnet, um eine möglichst gleichmäßige Aufgabe des Brühwassers über den gesamten Filterquerschnitt zu erreichen.

Die Oberseite 15 des Kaffeefilteraufsatzes ist so profiliert, daß das oben eingegossene heiße Wasser möglichst gleichmäßig auf die einzelnen Kreise 20, 21, 22 verteilt wird. So ist im dargestellten Beispiel eine zentrale Erhebung 23 vorgesehen, die das beispielsweise von einer automatischen Kaffeemaschine erzeugte heiße Wasser, das von einem Tropfauslaß der Heizeinrichtung herabtropft, gleichmäßig in radialer Richtung verteilt. Die Oberseite 15 kann zum Außenumfang hin entlang einer Schräge ansteigen.

Es können verschiedene Einsätze 24, 25 vorgesehen sein, die auf der Oberseite des Kaffeefilteraufsatzes 10 so eingesetzt werden, daß entweder die Öffnungen des äußeren Kreisrings 22 oder die Öffnungen der beiden äußeren Kreisringe 21 und 22 abgedeckt werden, so daß Brühwasser nur über die freibleibenden Öffnungen nach unten auf das Kaffeemehl tropfen kann. Dazu weisen die Einsätze 24, 25 ein im Wesentlichen L-förmiges Profil auf, wobei der horizontale Sockel 26, 27 jedes Einsatzes 24, 25, so dimensioniert ist, daß die entsprechende Anzahl von Kreisringen bedeckt wird. Obwohl von einem "horizontalen" Sockel gesprochen wird, versteht sich, daß bei einer abgeschrägten Oberseite 15 des erfindungsgemäßen Kaffeefilteraufsatzes die Kontur der Sockel 26, 27 entsprechend angepasst ist, so daß ein dichtes Verschließen der Öffnungen der jeweiligen Außenringe 21 und/oder 22 gewährleistet ist.

Vorzugsweise überragt der Haltering 12 des erfindungsgemäßen Kaffeefilteraufsatzes 10 die Oberseite 15 mit einem gewissen Überstand 28, so daß ein Überlaufen von Brühwasser verhindert wird.
Fig. 2 zeigt eine Aufsicht auf die Oberseite 15 des erfindungsgemäßen Kaffeefilteraufsatzes, allerdings ohne Einsatz 24 oder 25, wobei die bereits im Zusammenhang mit der Fig. 1 erläuterten Bauelemente mit denselben Bezugsziffern bezeichnet sind. Man erkennt insbesondere die 3 Kreisringe 20, 21, 22, auf denen jeweils 4 Durchlaßöffnungen 17 gleichmäßig verteilt sind.
Fig. 3 zeigt eine Variante des Kaffeefilteraufsatzes der Figuren 1 und 2 in der Aufsicht. Bauelemente, die dieselbe oder eine vergleichbare Funktion wie bereits im Zusammenhang mit den Figuren 1 und 2 erläuterte Bauelemente erfüllen, wurden mit denselben Bezugsziffern bezeichnet. Man erkennt, daß bei der in Figur 3 dargestellten Variante am Außenrand des Kaffeefilteraufsatzes 10 ein Bügel 30 eines Scharniers als Befestigungsmittel angeformt ist, so daß der Kaffeefilteraufsatz schwenkbar am Gehäuse einer Kaffeemaschine angelenkt werden kann. Zur leichteren Handhabung des Kaffeefilteraufsatzes ist außerdem eine Haltenase 31 vorgesehen, die vom Benutzer zum Schwenken des Kaffeefilteraufsatzes ergriffen werden kann.
Fig. 4 zeigt schematisch eine erfindungsgemäße Kaffeemaschine, die mit einem erfindungsgemäßen Kaffeefilteraufsatz ausgestattet ist. Die Kaffeemaschine 40 umfasst in an sich bekannter Weise ein Gehäuse 41, einen Frischwasserbehälter 42, eine Brüheinrichtung, die eine Heizeinheit 43, ein Steigrohr 44 und einen Auslaß 45 für das Brühwasser umfasst, eine Filtereinheit mit einem Filterhalter 14 und einen unter der Filtereinheit angeordneten Kaffeebehälter 46. Die Filtereinheit umfasst außerdem einen über dem Filterhalter, also zwischen der Auslaßöffnung 44 für Brühwasser und dem Filterhalter 14 angeordneten erfindungsgemäßen Kaffeefilteraufsatz 10. Der Kaffeefilteraufsatz ist im dargestellten Beispiel über ein Scharnier 47 am Gehäuse 41 der Kaffeemaschine schwenkbar angelenkt und kann vom Benutzer bei Bedarf mittels der Haltenase 31 beispielsweise nach oben weggeklappt oder seitlich weggeschwenkt werden.

Die Erfindung betrifft in einem dritten Aspekt gemäß den Ansprüchen 36 bis 49 eine Vorrichtung, deren Auslaß aus Öffnungen besteht, die zumindest in zwei konzentrisch verlaufenden Kreisen angeordnet sind.

Der Vorteil der erfindungsgemäßen Vorrichtung liegt darin, daß sie in einfacher Weise bei üblichen Kaffeefiltern bzw. Kaffeefilterhaltern mit kreisrundem Querschnitt Verwendung finden können und ein gleichmäßiges Ausschwemmen der Aromastoffe aus dem Kaffeemehl über die gesamte Fläche des Kaffeemehls ermöglichen. In Abhängigkeit des Durchmessers des Kaffeefilters bzw. Kaffeefilterhalters wird die Anzahl der konzentrischen Kreise bestimmt. Das Brühwasser gelangt somit in die erfindungsgemäße Vorrichtung und wird hier gleichmäßig auf die konzentrischen Kreise verteilt, so daß die Vorrichtung auch noch eine Bevorratungsfunktion hat und ein Überlaufen des Kaffeefilters bzw. des Kaffeefilterhalters vermeidet, was beispielsweise dazu führt, daß Kaffeemehl in den Kaffee als sogenannter Kaffeesatz ausgetragen wird. Ein derartiger Kaffeesatz beeinträchtigt den Kaffeegenuss insbesondere bei der letzten der Kaffeekanne entnommenen Tasse.

Die erfindungsgemäße Vorrichtung erlaubt somit eine gleichmäßige Beaufschlagung des Kaffeemehls mit Brühwasser und gleichzeitig eine Regulierung der Zuflussmenge, so daß ein Überlaufen des Kaffeefilters bzw. Kaffeefilterhalters im wesentlichen vermieden wird.

Nach einem weiteren Merkmal der Erfindung gemäß dem dritten Aspekt ist vorgesehen, daß die Öffnungen schlitzförmig ausgebildet sind. Durch die schlitzförmige Ausbildung der Öffnungen wird die angestrebte Wirkung eines gleichmäßigen Brühvorgangs im Bereich des Kaffeemehls wesentlich verbessert.

Vorzugsweise sind die Öffnungen in unterschiedlichen Ebenen angeordnet, so daß ein gleichmäßiger Ablauf des Brühwassers gewährleistet ist. Hierdurch kann auch der Abstand zum Kaffeemehl variiert werden, so daß unterschiedliche Füllmengen des Kaffeefilters bzw. Kaffeefilterhalters berücksichtigt werden können. Es ergibt im weiteren die Möglichkeit, mehrere konzentrische Kreise anzuordnen, die im Bereich einer Ebene nicht anzuordnen sind.

Die Öffnungen des inneren Kreises umschließen eine konvex gewölbte Fläche, so daß gewährleistet ist, daß das gesamte konzentrisch aufgegebene Brühwasser in den Bereich der Öffnungen abfließen kann.

Die konvex gewölbte Fläche ist durch die Öffnungen von einer ebenen Ringfläche getrennt, die zur äußeren Ebene der Öffnungen geneigt ausgerichtet ist. Auch diese Merkmale dienen dazu, den Ablauf des Brühwassers in den Bereich der Öffnungen zu vereinfachen, um einen Ablauf des Brühwassers zu beschleunigen, so daß das Brühwasser mit möglichst hoher Temperatur auf das Kaffeemehl auftrifft. Durch einen zu langen Verbleib des Brühwassers in der Vorrichtung wird nämlich das Ausschwemmen der Aromastoffe aus dem Kaffeemehl dadurch nachteilig beeinflusst, daß das auftretende Brühwasser keine ausreichende Temperatur aufweist.

Es ist nach einem weiteren Merkmal der Erfindung gemäß dem dritten Aspekt vorgesehen, daß die Vorrichtung einen Ansatz mit einer einer Innenwandung des Kaffeefilters bzw. des Kaffeefilterhalters entsprechend ausgebildeten Außenfläche hat. Mit diesem Ansatz wird der in einen Kaffeefilterhalter eingesetzte Kaffeefilter (Kaffeefiltertüte) zwischen der Vorrichtung und dem Kaffeefilterhalter eingeklemmt, so daß ein Ablaufen des Brühwassers zwischen dem Kaffeefilterhalter und dem Kaffeefilter (Kaffeefiltertüte) verhindert wird. Der Kaffeefilter wird somit in jedem Fall in zutreffender Anordnung in dem Kaffeefilterhalter gehalten.

Es ist ferner vorgesehen, daß die Öffnungen im Querschnitt zumindest in einem Teilbereich U- oder V-förmig ausgebildet sind. Alternativ kann vorgesehen sein, daß die Öffnungen im Querschnitt T-förmig ausgebildet sind. Insgesamt ist es bei diesen Ausgestaltungen von Vorteil, wenn die Öffnungen zum Kaffeefilter bzw. Kaffeefilterhalter in ihrem Querschnitt verjüngt ausgebildet sind, um die Abflussgeschwindigkeit des Brühwassers zu regulieren, um beispielsweise das Überlaufen des Kaffeefilters bzw. Kaffeefilterhalters zu vermeiden. Gleichzeitig haben die voranstehend dargestellten Ausgestaltungen der Öffnungen den Vorteil, daß die Verjüngung der Öffnungen ein Zusammenlaufen im Zentrumsbereich der Vorrichtung und damit ein Abtropfen ausschließlich im Zentrumsbereich des Kaffeemehls verhindert wird.

Die Öffnungen sind nach einem weiteren Merkmal durch in gleichmäßigen Abständen angeordnete Stege in kreisbogenabschnittförmige Abschnitte unterteilt.

Vorzugsweise sind zwei oder drei Stege vorgesehen, welche jede Öffnung in Abschnitte unterteilen.

Nach einem weiteren Merkmal der Erfindung gemäß dem dritten Aspekt ist vorgesehen, daß die Öffnungen aus einer Vielzahl von Bohrungen bestehen.

Vorzugsweise weisen die Öffnungen eine Breite zwischen 1 und 2 mm, insbesondere von 1,5 mm auf. Gleiches gilt hinsichtlich der Bohrungen, die vorzugsweise einen Durchmesser zwischen 1 und 2 mm, insbesondere von 1,5 mm aufweisen. Bei diesen Bemaßungen haben sich besonders vorteilhafte Brühergebnisse eines Kaffeebrühvorgangs unter Verwendung der erfindungsgemäßen Vorrichtung ergeben.

Weitere Merkmale und Vorteile der Erfindung gemäß dem dritten Aspekt ergeben sich aus der nachfolgenden Beschreibung der zugehörigen Zeichnung, in der eine bevorzugte Ausführungsform einer erfindungsgemäßen Vorrichtung dargestellt ist. In der Zeichnung zeigen:

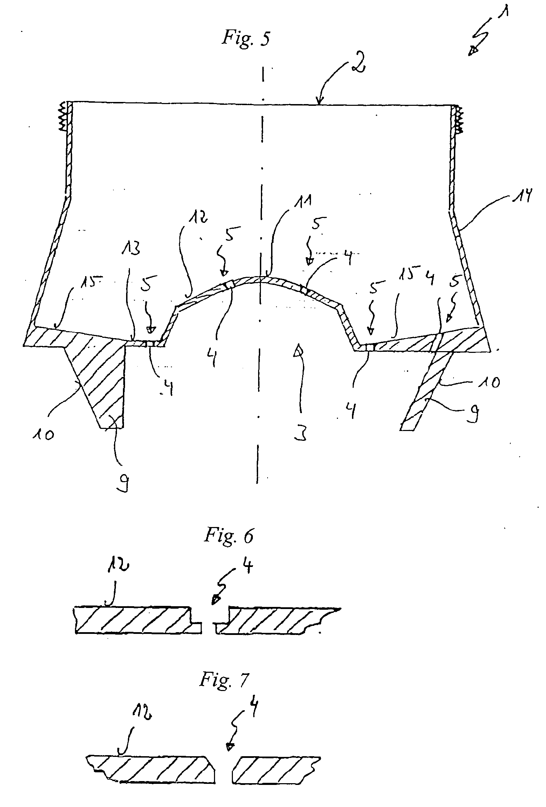

Figur 5 eine Vorrichtung zum Aufsetzen auf einen Kaffeefilter oder Kaffeefilterhalter im Querschnitt;
Figur 6 eine erste Ausführungsform einer Öffnung der Vorrichtung gemäß Figur 1 im Querschnitt;
Figur 7 eine zweite Ausführungsform einer Öffnung der Vorrichtung gemäß Figur 1 im Querschnitt und

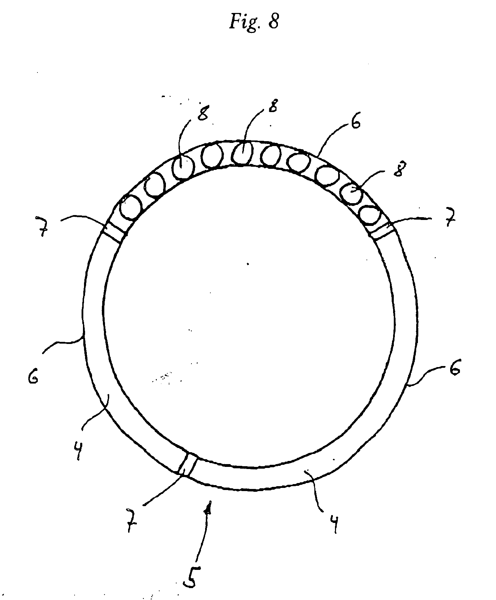

Figur 8 Ausführungsform einer Öffnung in einer Draufsicht.

In Figur 5 ist eine Vorrichtung 1 zum Aufsetzen auf einen nicht mehr dargestellten Kaffeefilterhalter dargestellt. Die Vorrichtung 1 weist einen Einlaß 2 und einen Auslaß 3 auf, wobei über den Einlaß 2 für das Aufbrühen eines Kaffees erforderliches Brühwasser in die Vorrichtung 1 eingegeben und über den Auslaß 3 dieses Brühwassers in den nicht näher dargestellten Kaffeefilterhalter ausfließt, in dem eine Kaffeefiltertüte mit Kaffeemehl angeordnet ist.

Der Auslaß 3 besteht aus Öffnungen 4, die in zwei (linke Hälfte der Figur 5) bzw. drei (rechte Hälfte der Figur 5) konzentrisch verlaufenden Kreisen 5 angeordnet sind.

Die Öffnungen 4 sind schlitzförmig ausgebildet und bilden gemäß Figur 8 kreisbogenabschnittförmige Abschnitte 6, wobei die Abschnitte durch Stege 7 voneinander getrennt sind.

In Figur 8 ist ein Abschnitt 6 dargestellt, der kreisbogenabschnittförmig ausgebildet ist und eine Vielzahl von Bohrungen 8 aufweist.

Im Bereich des Auslasses 3 weist die Vorrichtung einen Ansatz 9 auf, der eine Aussenfläche 10 hat, die entsprechend einer nicht näher dargestellten Innenwandung des nicht näher dargestellten Kaffeefilterhalters ausgebildet ist. Dieser Ansatz 9 liegt mit seiner Aussenfläche 10 auf der Kaffeefiltertüte auf, die zwischen der Aussenfläche 10 des Ansatzes 9 und der Innenwandung des Kaffeefilterhalters festgeklemmt ist.

Gemäß Figur 5 sind die Öffnungen 4 in unterschiedlichen Ebenen angeordnet. So umschließen die Öffnungen 4 des inneren Kreises 5 eine konvex gewölbte Fläche 11, die ein Abfließen des Brühwassers in den Bereich der Öffnungen 4 unterstützt. Die Öffnungen 4 des inneren Kreises 5 trennen diese gewölbte Fläche 11 von einer ebenen Ringfläche 12, die zur Ebene 13 der Öffnungen 4 des äußeren Kreises geneigt ausgerichtet ist. Zur Wandung 14 der Vorrichtung 1 ist die sich an die Ebene 13 anschließende Bodenfläche 15 geneigt ausgerichtet, so daß auch hier sich ansammelndes Brühwasser unmittelbar den Öffnungen des äußeren Kreises 5 zugeführt wird.

Gemäß den Figuren 6 und 7 sind die Öffnungen 4 in ihrem Querschnitt sich verjüngend ausgebildet. Die Verjüngung erfolgt hierbei in Richtung des Auslasses 3. Figur 6 zeigt ein Öffnung 4, die im Querschnitt T-förmig ausgebildet ist. Demgegenüber ist in Figur 7 eine Öffnung 4 dargestellt, die im Querschnitt im oberen Teilbereich V-förmig ausgebildet ist.

Die voranstehend beschriebenen Öffnungen 4 weisen eine Breite von 1,5 mm auf. Sind die Öffnungen 4 als Bohrungen 8 ausgebildet, so haben diese einen Durchmesser von 1,5 mm.

Die Erfindung betrifft in einem vierten Aspekt gemäß den Ansprüchen 50 bis 52 eine Vorrichtung, deren Auslaß aus Öffnungen besteht, die zumindest in zwei konzentrisch verlaufenden Kreisen angeordnet sind.

Der Vorteil der erfindungsgemäßen Kaffeewasser-Aufsatzverteiler für Kaffeemaschine und Kaffeefilter gemäß dem vierten Aspekt liegt darin, daß sie in einfacher Weise bei üblichen Kaffeefiltern bzw. Kaffeefilterhaltern mit kreisrundem Querschnitt Verwendung finden können und ein gleichmäßiges Ausschwemmen der Aromastoffe aus dem Kaffeemehl über die gesamte Fläche des Kaffeemehls ermöglichen. In Abhängigkeit des Durchmessers des Kaffeefilters bzw. Kaffeefilterhalters wird die Anzahl der konzentrischen Kreise bestimmt. Das Brühwasser gelangt somit in den Kaffeewasser-Aufsatzverteiler und wird hier gleichmäßig auf die konzentrischen Kreise verteilt, so daß der Kaffeewasser-Aufsatzverteiler auch noch eine Bevorratungsfunktion hat und ein Überlaufen des Kaffeefilters bzw. des Kaffeefilterhalters vermeidet, was beispielsweise dazu führt, daß Kaffeemehl in den Kaffee als sogenannter Kaffeesatz ausgetragen wird. Ein derartiger Kaffeesatz beeinträchtigt den Kaffeegenuss insbesondere bei der letzten der Kaffeekanne entnommenen Tasse.

Der erfindungsgemäße Kaffeewasser-Aufsatzverteiler gemäß dem vierten Aspekt erlaubt somit eine gleichmäßige Beaufschlagung des Kaffeemehls mit Brühwasser und gleichzeitig eine Regulierung der Zuflussmenge, so daß ein überlaufen des Kaffeefilters bzw. Kaffeefilterhalters im wesentlichen vermieden wird.

Nach einem weiteren Merkmal der Erfindung gemäß dem vierten Aspekt ist vorgesehen, daß die Öffnungen schlitzförmig ausgebildet sind. Durch die schlitzförmige Ausbildung der Öffnungen wird die angestrebte Wirkung eines gleichmäßigen Brühvorgangs im Bereich des Kaffeemehls wesentlich verbessert.

Vorzugsweise sind die Öffnungen in unterschiedlichen Ebenen angeordnet, so daß ein gleichmäßiger Ablauf des Brühwassers gewährleistet ist. Hierdurch kann auch der Abstand zum Kaffeemehl variiert werden, so daß unterschiedliche Füllmengen des Kaffeefilters bzw. Kaffeefilterhalters berücksichtigt werden können. Es ergibt im weiteren die Möglichkeit, mehrere konzentrische Kreise anzuordnen, die im Bereich einer Ebene nicht anzuordnen sind.

Die Öffnungen des inneren Kreises umschließen eine konvex gewölbte Fläche, so daß gewährleistet ist, daß das gesamte konzentrisch aufgegebene Brühwasser in den Bereich der Öffnungen abfließen kann.

Die konvex gewölbte Fläche ist durch die Öffnungen von einer ebenen Ringfläche getrennt, die zur äußeren Ebene der Öffnungen geneigt ausgerichtet ist. Auch diese Merkmale dienen dazu, den Ablauf des Brühwassers in den Bereich der Öffnungen zu vereinfachen, um einen Ablauf des Brühwassers in den Bereich der Öffnungen zu vereinfachen, um einen Ablauf des Brühwassers zu beschleunigen, so daß das Brühwasser mit möglichst hoher Temperatur auf das Kaffeemehl auftrifft. Durch einen zu langen Verbleib des Brühwassers in dem Kaffeewasser-Aufsatzverteiler wird nämlich das Ausschwemmen der Aromastoffe aus dem Kaffeemehl dadurch nachteilig beeinflusst, daß das auftretende Brühwasser keine ausreichende Temperatur aufweist.

Es ist nach einem weiteren Merkmal der Erfindung gemäß dem vierten Aspekt vorgesehen, daß der Kaffeewasser-Aufsatzverteiler einen Ansatz mit einer Innenwandung des Kaffeefilters bzw. des Kaffeefilterhalters entsprechend ausgebildeten Außenfläche hat. Mit diesem Ansatz wird der in einen Kaffeefilterhalter eingesetzte Kaffeefilter (Kaffeefiltertüte)zwischen dem Kaffeewasser-Aufsatzverteiler und dem Kaffeefilterhalter eingeklemmt, so daß ein Ablaufen des Brühwassers zwischen dem Kaffeefilterhalter und dem Kaffeefilter (Kaffeefiltertüte) verhindert wird. Der Kaffeefilter wird somit in jedem Fall in zutreffender Anordnung in dem Kaffeefilterhalter gehalten.

Es ist ferner vorgesehen, daß die Öffnungen im Querschnitt zumindest in einem Teilbereich U-oder V-förmig ausgebildet sind. Alternativ kann vorgesehen sein, daß die Öffnungen im Querschnitt T-förmig ausgebildet sind. Insgesamt ist es bei diesen Ausgestaltungen von Vorteil, wenn die Öffnungen zum Kaffeefilter bzw. Kaffeefilterhalter in ihrem Querschnitt verjüngt ausgebildet sind, um die Abflussgeschwindigkeit des Brühwassers zu regulieren, um beispielsweise das Überlaufen des Kaffeefilters bzw. Kaffeefilterhalters zu vermeiden. Gleichzeitig haben die voranstehend dargestellten Ausgestaltungen der Öffnungen den Vorteil, daß die Verjüngung der Öffnungen ein Zusammenlaufen im Zentrumsbereich des Kaffeewasser-Aufsatzverteilers und damit ein Abtropfen ausschließlich im Zentrumsbereich des Kaffeemehls verhindert wird.

Vorzugsweise sind zwei oder drei Stege vorgesehen, welche jede Öffnung in Abschnitte unterteilen.

Der Kaffeewasser-Aufsatzverteiler für Kaffeemaschine und Kaffeefilter ist so angeordnet, daß man von 4 bis 18 Tassen Kaffee mit nur einem Kunststofffilter sowie passende Papierfiltertüte aufbrühen kann. Des weiteren weist der Kaffeewasser-Aufsatzverteiler ein Oberteil sowie Unterteil auf, so daß eine Entfernung von sich absetzendem Kalk leicht möglich ist.

Durch die schlitzförmige Rundausbildung von 1 mm bis 1,5mm Schlitzöffnung ist eine Wassereinlaufmenge vorhanden, welche identisch eine Öffnung unten im Kunststofffilter aufweist, und somit es gegeben sein wird, daß es nur noch einen geringen Oberwasserspiegel im Filter geben wird, verbunden, daß man somit mehr Tassen Kaffee in einem Kunststofffilter mit passender Papierfiltertüte aufbrühen kann.

Weitere Merkmale und Vorteile der Erfindung gemäß dem vierten Aspekt ergeben sich aus der nachfolgenden Beschreibung der zugehörigen Zeichnung, in der eine bevorzugte Ausführungsform eines erfindungsgemäßen Kaffeewasser-Aufsatzverteilers dargestellt ist.

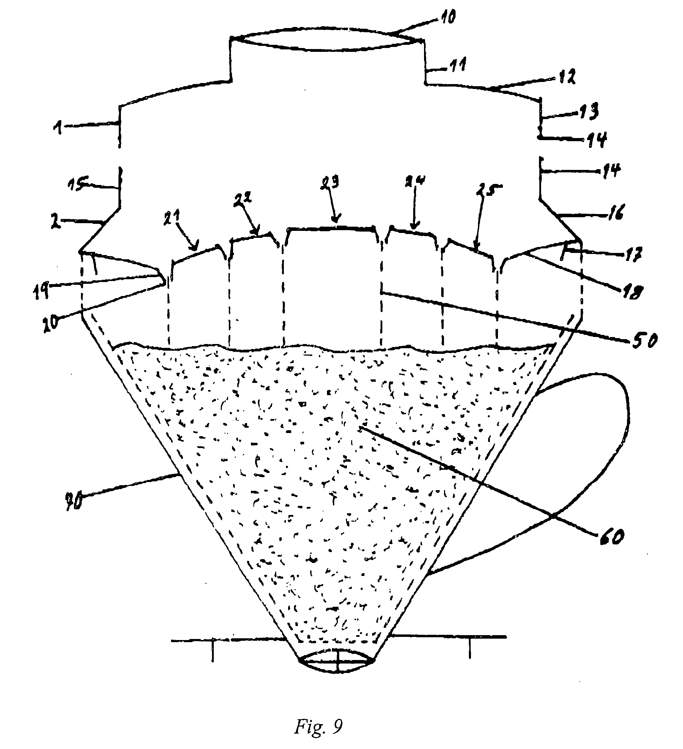

Figur 9 zeigt einen Kaffeewasser-Aufsatzverteiler zum Aufsetzen auf einen Kaffeefilter oder Kaffeefilterhalter mit einem oberen Teil und unteren Teil;
einen Kaffeewasser-Aufsatzverteiler mit (1) Oberteil zum auf und abdrehen auf dem unteren Teil (2);
einen Kaffeewasser-Aufsatzverteiler mit (10) einer senkrechte offene Rundöffnung-Wassereinlauföffnung;
einen Kaffeewasser-Aufsatzverteiler mit (12) eine
Runderhöhung verbunden mit (13) senkrechte Rundvertiefung sowie mit (14) ein Innengewinde;
einen Kaffeewasser-Aufsatzverteiler mit (2) dem unteren Teil, mit (14) ein Außengewinde und mit (15) eine senkrechte Rundöffnung;
einen Kaffeewasser-Aufsatzverteiler mit (16) einer Schrägung;
einen Kaffeewasser-Aufsatzverteiler mit (18) einer Runderhöhung verbunden mit (17) einer schrägen Rundvertiefung;
einen Kaffeewasser-Aufsatzverteiler mit (19) einer Dreiecksvertiefung verbunden mit (20) einer senkrechten Schlitzvertiefung;
einen Kaffeewasser-Aufsatzverteiler mit 21, 22, 23, 24 und 25 einer Runderhöhung.

Die Erfindung betrifft in einem fünften Aspekt gemäß den Ansprüchen 53 bis 57 eine Vorrichtung, deren Auslaß aus schlitzförmigen vertieften Öffnungen besteht, die zumindest in drei konzentrisch unterbrochenen verlaufenden Kreisen angeordnet sind.

Die Vorteile dieser Erfindung der Aromaverstärkervorrichtung liegen darin, daß der Einlaß von Kaffeewasser auf die gesamte Oberfläche des Kaffeemehls gleichmäßig ist und somit das Aroma verbessert wird.

Mit der Aromaverstärkervorrichtung liegen des weiteren folgende Vorteile vor: man benötigt nur noch eine Papierfiltertüte, einen Kaffeefilter und eine Kaffeemaschine. Außerdem wird es keinen offenen Kaffeefilter mehr geben, da der Einlaß von Kaffeewasser nur noch auf einer Lochöffnung von ca. 1 bis 2cm beruht. Die Aromaverstärkervorrichtung wird auf den Kaffeefilter nur noch aufgesetzt, so daß sich das Aufbrühen auf einem geschlossenen Kaffeefilter vollzieht.

Die Aromaverstärkervorrichtung kann man sowohl zum Aufbrühen mit der Hand als auch zum Aufbrühen mit der Maschine verwenden.

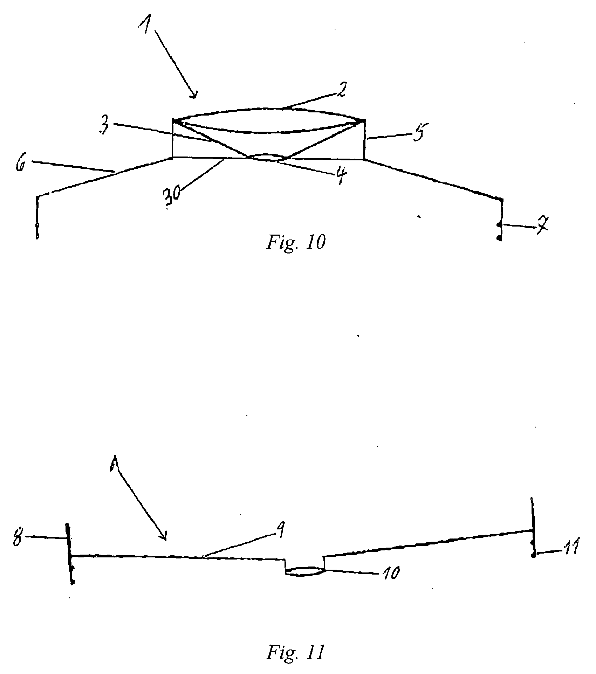

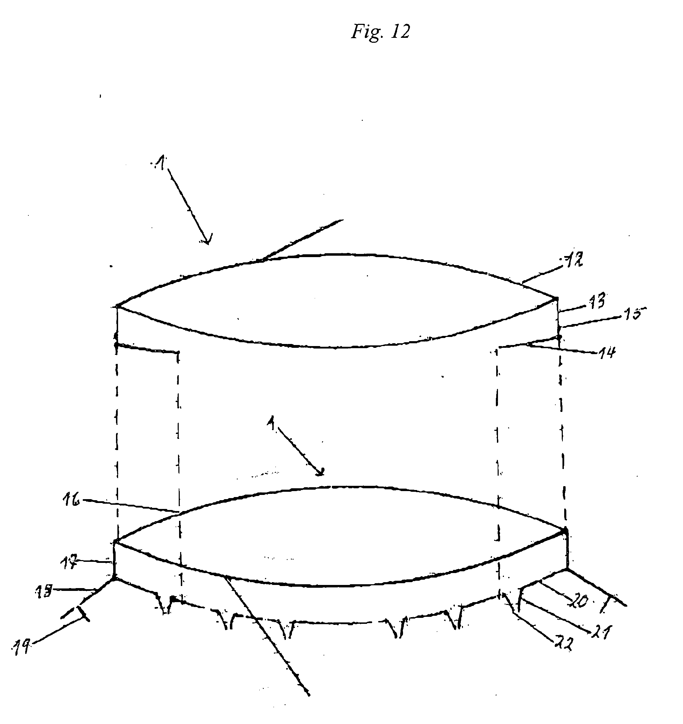

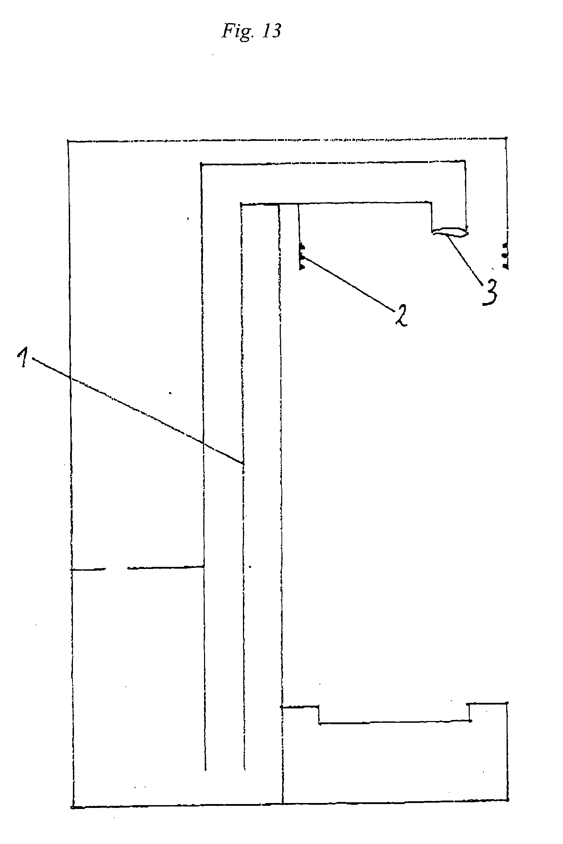

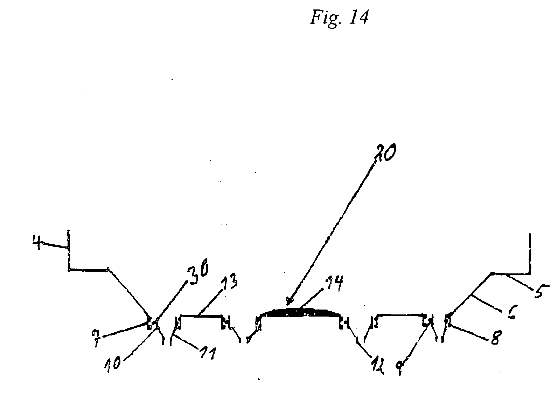

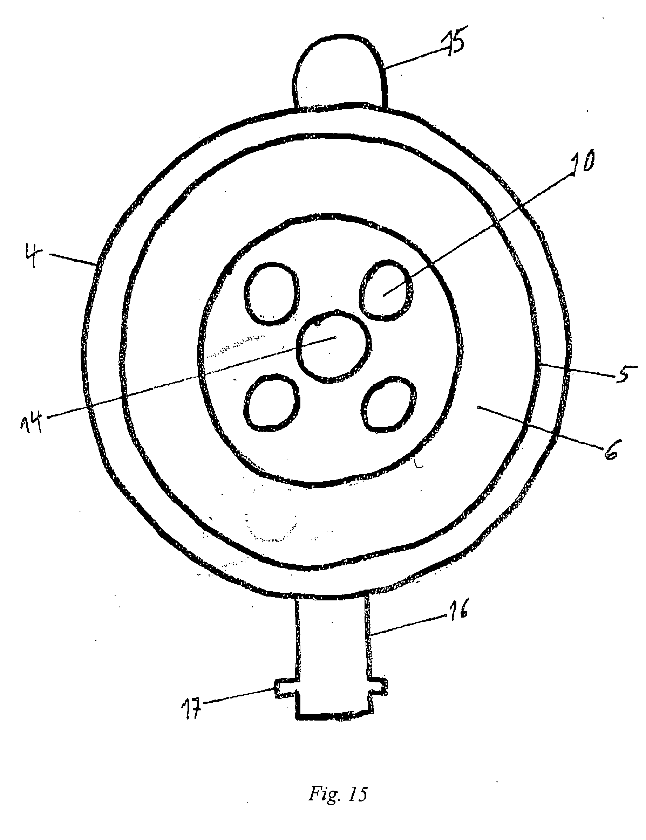

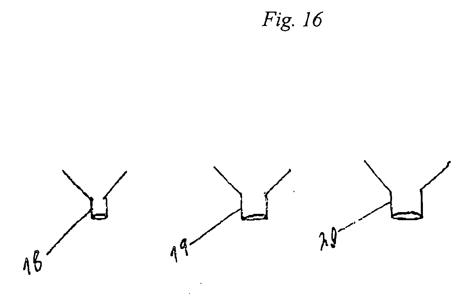

Die Erfindung gemäße dem fünften Aspekt ist in den Figuren 10 bis 12 veranschaulicht.

Die Erfindung betrifft in einem sechsten Aspekt gemäß den Ansprüchen 58 bis 62 eine Vorrichtung, bei der Wasserablaufschlauch vom Kaffeemaschinen-Wassertank bis zum oberen Kaffeemaschinen-Deckel ein einziges Teil ist und nicht mehr ein Wasserablauf-Arm aufgesteckt werden muss.

Der Wasserablaufschlauch lässt das kochende Wasser direkt auf den Wasseraufbrühverteiler laufen.

Der Wasseraufbrühverteiler weist im unteren Teil eine waagerechte Rundplatte auf, und darauf befinden sich mindestens 4 größere Lochöffnungen mit einem Gewinde darin.

Die 4 großen Lochöffnungen mit einem Gewinde ermöglichen ein Hinein- und Herausdrehen der einzelnen Wasserablauf-Vertiefungen.

Desweiteren weisen die Wasserablauf-Vertiefungen verschiedene Größen von Löchern auf - also einen Satz mit 4 Lochgrößen für einen milden Kaffee, mittelstarken Kaffee und starken Kaffee.

Zwischen den 4 großen Lochöffnungen befindet sich eine kleine Runderhöhung, so daß das Kaffeewasser gleichmäßig in den 4 großen Lochöffnungen ablaufen kann.

Von der waagerechten Rundplatte geht von außen eine schräge Runderhöhung nach oben und von der obigen Runderhöhung geht nach außen eine waagerechte kurze Aufnahmeplatte des Kaffeemaschinendeckels, welcher dann mit einer senkrechten Erhöhung seine Festigkeit erzielt.

Außen an der senkrechten Erhöhung befindet sich ein Gewinde, womit im Kaffeemaschinendeckel der Wasseraufbrühverteiler hinein- und herausgedreht werden kann.

Außen an der senkrechten Erhöhung beim Wasseraufbrühverteiler befindet sich oben eine Steckvorrichtung, wo der Wasseraufbrühverteiler in die Kaffeemaschine gesteckt werden kann, und auf der anderen Seite des Wasseraufbrühverteilers befindet sich ein Griff, damit der Wasseraufbrühverteiler bewegt werden kann.

## Patentansprüche

1. Aromaverstärkervorrichtung, umfassend ein Kaffeewasser-Set zum Aufsetzen auf einen Kaffeefilter oder Kaffeefilterhalter, sowie zum Eindrehen in einen Kaffeemaschinen-Deckel, **dadurch gekennzeichnet, dass** sie eine obere Rundöffnung (Fig. 10; 2), eine schräge Vertiefung (Fig. 10; 3) sowie eine Rundöffnung (Fig. 10; 4) aufweist.

2. Aromaverstärkervorrichtung nach Anspruch 1, **dadurch gekennzeichnet, dass** sie eine waagerechte Rundplatte (30) sowie eine schräge Rundvertiefung (Fig. 10; 6) und ein Drehgewinde (Fig. 10; 7) aufweist.

3. Aromaverstärkervorrichtung nach Anspruch 2, **dadurch gekennzeichnet, dass** sie eine senkrechte Rundvertiefung (Fig. 11; 8), eine schräge Rundvertiefung (Fig. 11; 9) und in der Mitte eine Lochöffnung (Fig. 11; 10) sowie ein Drehgewinde (Fig. 11; 11) aufweist.

4. Aromaverstärkervorrichtung nach Anspruch 3, **dadurch gekennzeichnet, dass** sie eine Rundöffnung (Fig. 12; 12), welche eine senkrechte Rundvertiefung (Fig. 12; 13), ein Drehgewinde (Fig. 12; 15) und eine Rundplatte (Fig. 12; 14) aufweist.

5. Aromaverstärkervorrichtung nach Anspruch 4, **dadurch gekennzeichnet, dass** sie eine Rundvertiefung (Fig. 12; 16), eine senkrechte Rundvertiefung (Fig. 12; 17), eine schräge Rundvertiefung (Fig. 12; 18), verbunden mit einer schrägen Rundvertiefung (Fig. 12; 19), eine schräge Rundvertiefung (Fig. 12; 20) und eine Schlitz-Rundvertiefungs-Öffnung (Fig. 12; 21), verbunden mit einer senkrechten Rundvertiefung (Fig. 12; 22), aufweist.
